# EUROPÄISCHE PATENTSCHRIFT

(11) **EP 3 280 886 B1**
(45) Veröffentlichungstag und Bekanntmachung des Hinweises auf die Patenterteilung: **20.03.2019**
(21) Anmeldenummer: 16714409.6
(22) Anmeldetag: 04.04.2016
(51) Int. Cl.: F01L 1/053, F01L 13/00, F16F 1/04, F16F 3/04

(54) **ELEKTROMAGNETISCHER AKTUATOR MIT KLEMMFREIEN STOESSELN**
ELECTROMAGNETIC ACTUATOR HAVING CLAMPING-FREE TAPPETS
ACTIONNEUR ÉLECTROMAGNÉTIQUE À POUSSOIRS SANS GRIPPAGE

(30) Priorität: 08.04.2015 DE 102015105337
(43) Veröffentlichungstag der Anmeldung: 14.02.2018
(73) Patentinhaber: Kendrion (Villingen) GmbH, 78048 Villingen-Schwenningen (DE)
(72) Erfinder: SUZUKI, Tsuneo, 78087 Mönchweiler (DE); BURKART, Harald, 78054 Villingen-Schwenningen (DE); MAIWALD, Wolfram, 78052 Villingen-Schwenningen (DE); MARULL-KESSLER, Pedro, 78087 Mönchweiler (DE); TISCHTSCHENKO, Michael, 78647 Trossingen (DE); SCHÜTZ, Martin, 78086 Brigachtal (DE)
(74) Vertreter: Westphal, Mussgnug & Partner Patentanwälte mbB
(86) Internationale Anmeldenummer: PCT/EP2016/057347
(87) Internationale Veröffentlichungsnummer: WO 2016/162306

(56) Entgegenhaltungen:
- EP-A2- 1 352 794
- DE-A1- 10 055 948
- DE-A1-102008 029 324
- DE-A1-102010 024 030
- DE-A1-102011 078 525

## Beschreibung

Die Erfindung betrifft eine Stellvorrichtung, beispielsweise eine Stellvorrichtung für Kraftfahrzeuge, nach dem Oberbegriff des Patentanspruchs 1, sowie ein Kraftfahrzeug, das eine derartige Stellvorrichtung aufweist. Insbesondere betrifft die Erfindung eine Stellvorrichtung zur Veränderung der Ventilöffnung und/oder der Ventilöffnungszeiten bei Verbrennungskraftmaschinen und/oder eine Stellvorrichtung zur partiellen Zylinderabschaltung von Verbrennungskraftmaschinen.

Stellvorrichtungen, insbesondere Stellvorrichtungen mit elektromagnetisch betriebenen Aktoren, werden in der Kraftfahrzeugtechnik zum Öffnen und Schließen der Einlass- sowie Auslassventile der Zylinder von Diesel- und/oder Benzinmotoren verwendet, die das Kraftstoffgemisch in den Verbrennungsraum einführen und die verbrannten Endprodukte aus dem Verbrennungsraum wieder ausleiten. Die Zeitpunkte des Öffnens und des Schließens der Ventile müssen dabei so gewählt werden, dass die Verbrennungsmaschine die erzeugte Wärmeenergie möglichst effektiv in Motorkraft umsetzt. Dies geschieht durch die Ventilsteuerung oder den Ventiltrieb. Darunter versteht man den Mechanismus, der bei einem Hubkolbenmotor die Ventile und damit den Ladungswechsel durch Öffnen und Schließen der Einlass- und Abgasaustrittskanäle steuert. In der Regel wird das Ventil dabei von einer Nockenwelle über einen Stößel, einen Schlepphebel oder Kipphebel geöffnet. Geschlossen werden Ventile durch Schraubenfedern, bisweilen durch Drehstabfedern, Gasfedern oder über einen Schließnocken zwangsgesteuert. Die Nockenwelle wird dabei von der Kurbelwelle des Motors angetrieben.

Mit der ständigen Weiterentwicklung elektrischer Komponenten und maßgeblich unterstützt durch die kontinuierlich gewachsenen Anforderungen zur Reduzierung des Kraftstoffverbrauches bei Erhöhung der Effizienz der Verbrennungsmaschine hat die Elektrifizierung im Kraftfahrzeug in den letzten Jahren entscheidend an Bedeutung gewonnen. Hier konnten beispielsweise durch Optimierung der Steuerzeiten von Ventilsteuerungen große Fortschritte erzielt werden. Die Nockenwellenverstellung hat die Aufgabe, für den jeweiligen Motor die günstigsten Ventilsteuerzeiten für die Betriebszustände Leerlauf, maximale Leistung und Drehmoment, sowie Abgasrückführung, einzustellen. Daher hat auch bei Nockenwellenverstellern ein solcher Technologiewechsel stattgefunden.

Solche Stellvorrichtungen sind z. B. aus DE 102 40 774 A1 bekannt und werden für unterschiedliche Einsatzzwecke benutzt, insbesondere aber auch für die Nockenwellenverstellung bei Kraftfahrzeugen. Das Grundprinzip dieser bekannten Stellvorrichtung besteht darin, dass ein Kolben als Stellelement, das endseitig einen Eingriffsbereich für die vorgesehene Stellaufgabe aufweist, in einem Gehäuse geführt und mittels einer im Gehäuse vorgesehenen, elektromagnetisch betätigbaren Aktoreinheit gegen die Kraft einer Rückstellfeder aus dem Gehäuse heraus bewegt werden kann.

Die DE 10 2007 024 600 A1 offenbart eine Stellvorrichtung mit einem zwischen einer eingefahrenen Halteposition und einer ausgefahrenen Arbeitsposition verfahrbaren Aktuatorstift zur Verstellung eines Maschinenteiles, das eine mit dem Aktuatorstift in dessen Arbeitsposition zusammenwirkende Verschiebenut aufweist, die den Aktuatorstift zurück in dessen Halteposition verlagert, und das insbesondere als auf einer Trägerwelle drehfest und längsverschiebbar angeordnetes Nockenstück eines hubvariablen Ventiltriebes einer Brennkraftmaschine ausgebildet ist. Dadurch soll eine radial möglichst klein bauende Stellvorrichtung geschaffen werden, die den Aktuatorstift sicher und gegenüber der Verschiebenut ausreichend eingriffsfrei in der Halteposition fixiert.

Die DE 10 2011 078 525 A1 offenbart ein Schiebenockensystem mit einer bistabilen Aktoreinheit. Bei dieser Stelleinrichtung stützt sich die Druckfeder an der Rasteinrichtung ab, sodass an dem Aktorstift eine der Druckfeder entgegengerichtete Stützfeder angreift, die sich an der Führungshülse oder einem mit ihr verbundenen Bauteil abstützt, wobei die Druck- und Stützfeder mit der Rasteinrichtung eine bistabile Anordnung des Aktorstiftes bilden, wobei die Auslösung der bistabilen Anordnung durch eine Elektromagneteinheit erfolgt. Durch eine derartige Ausgestaltung kann erreicht werden, dass das Ausfahren des Aktorstiftes zunächst durch die Elektromagneteinheit bewirkt wird und zwar so weit, bis der Kipppunkt der bistabilen Anordnung des Aktorstiftes erreicht ist und die Rasteinrichtung gelöst ist, sodass die Druckfeder dann das vollständige Ausfahren des Aktorstiftes in die Verschiebenut übernimmt. Dadurch ist nur eine verhältnismäßig kleine elektromagnetische Kraft zum Zusammendrücken der Stützfeder erforderlich. Die Druckfeder übernimmt das schnelle Ausfahren des Aktorstiftes. Bei dieser Vorrichtung wird ein Paar parallel zueinander bewegbarer Stößel durch einen einzelnen Aktor, der mit einer Kippvorrichtung verbunden ist, nach unten gedrückt. Auf diese Weise kann entweder der eine Stößel oder der andere Stößel in die Führungsnut, beispielsweise einer Schiebenockenwelle, eingreifen. Bei derartigen Einrichtungen zeigt sich jedoch, dass die federgelagerten Stößel in ihren Führungshülsen leicht verkanten oder verkippen können, sodass eine sichere Funktionsweise eines derartigen Stellelementes nicht garantiert werden kann. Insbesondere, wenn derartig aufgebaute Stößel in Nuten von Schiebenockensystemen abwechselnd eingreifen und darin geführt werden, treten häufig, zumindest bei einem Stößel, derartige Funktionsstörungen auf.

Aufgabe der vorliegenden Erfindung ist es daher, solche Funktionsstörungen und die mit den bekannten Stellvorrichtungen verbundenen Nachteile zu vermeiden.

Gelöst wird diese Aufgabe durch eine Stellvorrichtung mit den Merkmalen des Patentanspruchs 1. Vorteilhafte Ausführungsformen sind in den Unteransprüchen angegeben.

Die erfindungsgemäße Stellvorrichtung weist einen ersten und einen zweiten Stößel auf, wobei der erste Stößel zumindest teilweise in einer ersten Führungshülse und der zweite Stößel zumindest teilweise in einer zweiten Führungshülse verschiebbar angeordnet ist, wobei der erste Stößel, beispielsweise in und/oder an der ersten Führungshülse, zumindest abschnittsweise entlang seiner Längsachse von einer ersten, als Schraubenfeder ausgebildeten Rückholfeder umgeben ist und der zweite Stößel, beispielsweise in und/oder an der zweiten Führungshülse, zumindest abschnittsweise entlang seiner Längsachse von einer zweiten, als Schraubenfeder ausgebildeten Rückholfeder umgeben ist, und wobei die Führungshülsen in festem Abstand zueinander angeordnet sind. Die Stößel sind dabei in Richtung ihrer jeweiligen Längsachsen in ihren jeweiligen Führungshülsen hin- und her beweglich verschiebbar angeordnet.

Erfindungsgemäß ist die erste Rückholfeder eine im Linkssinn gewickelte Schraubenfeder und die zweite Rückholfeder eine im Rechtssinn gewickelte Schraubenfeder. Bei Versuchen hat sich nämlich überraschenderweise gezeigt, dass, wenn ein Stößel in die Führungsnut beispielsweise eines Schiebenockensystems eingreift, der Stößel ein Drehmoment um seine Längsachse, in welcher er in seiner Führungshülse verschiebbar angeordnet ist, entweder nach rechts oder nach links erfährt. Dies liegt daran, dass der Stößel einen Rand, beispielsweise eine Seitenwand der Nut, in der er geführt wird, berührt und/oder dass der Stößel nicht exakt planparallel auf dem Boden der Führungsnut aufsitzt. Wenn sich nun beispielsweise die Nockenwelle, die die Führungsnut aufweist, dreht und der Stößel in diese Führungsnut eingreift, wird ein Drehmoment auf den Stößel übertragen. Dieses Drehmoment bewirkt, dass eine Torsionskraft auf die Rückholfeder ausgeübt wird, die deren Durchmesser, je nach Drehsinn der wirkenden Torsionskraft, geringfügig vergrößert oder verkleinert. Wenn die entsprechende Rückholfeder eine im gleichen Sinn wie das auf den Stößel wirkende Drehmoment gewickelte Schraubenfeder ist, kann sich der Durchmesser der Rückholfeder nur verkleinern. Eine Funktionsstörung tritt dann nicht ein. Ist die Rückholfeder jedoch eine im entgegengesetzten Sinn wie das auf den Stößel wirkende Drehmoment gewickelte Schraubenfeder, kann sich ihr Durchmesser durch die auf sie wirkende Torsionskraft vergrößern, was dazu führen kann, dass die Rückholfeder in ihrer Führungshülse verkantet und den Stößel nicht mehr in seine Ausgangsposition zurückschieben kann. Dadurch wird eine Funktionsstörung verursacht, die zu einem frühzeitigen Funktionsausfall der Stellvorrichtung führt. Es hat sich gezeigt, dass ein solcher frühzeitiger Funktionsausfall dadurch vermieden werden kann, dass bei den Stößeln jeweils Schraubenfedern eingesetzt werden, deren Wicklungssinn der gleiche ist, wie der Drehsinn der jeweiligen Stößel in der Nut der Nockenwelle.

Bei paarweise im festen Abstand zueinander angeordneten Führungshülsen, die über auf sie wirkende Aktoren jeweils einen Stößel in Richtung auf eine gemeinsame Nockenwelle führen, hat sich gezeigt, dass der erste Stößel der ist, der, sofern er ein Drehmoment um seine Längsachse erfährt, immer ein Drehmoment im Linkssinn erfährt, sobald er in die Nut der gemeinsamen Nockenwelle eingreift, während der zweite Stößel der ist, der, sofern er ein Drehmoment um seine Längsachse erfährt, ein Drehmoment im Rechtssinn erfährt, sobald er in eine Nut der gemeinsamen Nockenwelle eingreift. Sind nun die Rückholfedern beide im Rechtssinn oder beide im Linkssinn gewickelte Schraubenfedern, tritt eine frühzeitige Funktionsstörung der Vorrichtung dadurch ein, dass der Stößel, dessen Drehmoment entgegengesetzt dem Wicklungssinn seiner Schraubenfeder ist, frühzeitig in der Führungshülse mit seiner Schraubenfeder verkantet und dadurch einen Funktionsausfall verursacht.

Die frühzeitige Funktionsstörung an dem Stößel, dessen Drehmoment entgegengesetzt dem Wicklungssinn seiner Schraubenfeder ist tritt meist dadurch ein, dass ein Ende der Schraubenfeder sich unter der letzten Spiralwindung der Schraubenfeder verklemmt. Das Ende der Schraubenfeder kommt damit zwischen der letzten Spiralwindung der Schraubenfeder und dem Stößel zu liegen, wodurch die Beweglichkeit des Stößels entlang seiner Längsachse beeinträchtigt wird. Bevorzugt weisen die beiden Schraubenfedern daher an zumindest jeweils einem ihrer beiden Enden, vorzugsweise jedoch an jedem ihrer beiden Enden, jeweils wenigstens zwei aneinander anliegende Endwindungen auf, die auch dann aneinander anliegen, wenn die Schraubenfedern nicht zusammengedrückt sind. Durch die beiden Endwindungen wird ein Aufweiten der Feder in diesem Bereich verhindert so dass während des Betriebs das Ende der Schraubenfeder zwischen der Schraubenfeder und dem Stößel nicht eingeklemmt werden kann.

Ein Grund für das Verklemmen der Schraubenfeder kann sein, dass das Ende der Schraubenfeder durch das Drehen des Stößels entgegen dem Wicklungssinn der Schraubenfeder im Lauf der Zeit abgeschliffen wird, wodurch die Elastizität des die Schraubenfeder bildenden Materials an dieser Stelle verringert wird. Ist das Material am Ende der Schraubenfeder hinreichend weit abgeschliffen, kann auch die geringe Reibungskraft zwischen dem Stößel und dem Schraubenfederende das Schraubenfederende leicht zwischen der letzten Windung der Schraubenfeder und dem Stößel einklemmen. Aus diesem Grund ist es vorteilhaft, wenn die Enden der Schraubenfeder nicht abgeschliffen sind und der Wicklungssinn der Schraubenfeder dem Drehsinn des Stößels entspricht. Zusätzlich können die Federn an ihren Enden auch verdickt, beispielsweise mit gestauchtem Draht größeren Durchmessers, ausgebildet sein.

Um beispielsweise die im Linkssinn gewickelte Schraubenfeder von der im Rechtssinn gewickelten Schraubenfeder schnell unterscheiden zu können, damit beim Zusammenbau die richtige Schraubenfeder um den richtigen Stößel herum angeordnet wird, weist entweder die im Linkssinn gewickelte Schraubenfeder, oder die im Rechtssinn gewickelte Schraubenfeder an zumindest einem ihrer beiden Enden drei aneinander anliegende Endwindungen auf, während die jeweils andere Schraubenfeder an ihren Enden eine andere Anzahl aneinander anliegende Endwindungen aufweist.

Die Schraubenfedern können aus einem metallischen Material bestehen. In einer alternativen Ausführungsform sind die beiden Schraubenfedern als glasfaserverstärkte Kunststofffedern ausgebildet. Solche Federn sind besonders elastisch und gegenüber Metallfedern besonders langlebig.

Die Stellvorrichtung kann beispielsweise einen einzigen Aktor aufweisen, der in Wirkverbindung mit einem vorderen Ende beider Stößel steht. Sie kann alternativ auch einen ersten und einen zweiten Aktor aufweisen, wobei der erste Aktor in Wirkverbindung mit einem vorderen Ende des ersten Stößels und der zweite Aktor in Wirkverbindung mit einem vorderen Ende des zweiten Stößels steht. Eine Stellvorrichtung mit zwei Aktoren für zwei Stößel kann den einen Stößel getrennt vom anderen Stößel ansteuern und erlaubt auf diese Weise eine separate Einzelsteuerung jedes einzelnen Stößels.

Die Aktoren sind vorteilhafterweise stabförmig ausgebildet, besonders vorteilhafterweise zylinderförmig, und sie sind entlang ihrer jeweiligen Längsachsenrichtungen beweglich geführt.

Die Aktoren können zwar mechanisch betätigbar sein, sie sind jedoch vorteilhafterweise magnetisch oder elektromagnetisch betätigbar und vorzugsweise von jeweils separaten Aktorspulen umgeben. Dadurch können die Aktoren mittels einfacher elektrischer Steuerpulse, die beispielsweise über ein Computerprogramm berechnet werden, gezielt so betätigt werden, dass auf die Stößel eine optimierte Druckfolge ausgeübt wird, welche dafür sorgt, dass die Verbrennungskraftmaschine im jeweils optimierten Betriebsbereich arbeitet.

Die Stößel sind stabförmig, vorzugsweise zylinderförmig ausgebildet. Sie weisen jeweils eine Längsachse, ein vorderes Ende mit einem verdickt ausgebildeten Stößelkopf und ein hinteres Ende auf. Die Rückholfedern, die die Stößel in ihre Ausgangsposition zurückbefördern, sind vorteilhafterweise als Druckfedern ausgebildet, wobei sich jede Rückholfeder an und/oder in der Führungshülse, an und/oder in der sie angeordnet ist und an dem Stößelkopf des Stößels, den sie umgibt, abstützt.

Die beschriebene Stellvorrichtung weist vorteilhafterweise eine Nockenwelle mit Nuten auf, welche um die Drehachse der Nockenwelle verlaufend angeordnet sind. Die hinteren Enden der Stößel sind dabei so ausgebildet und relativ zu der Nockenwelle so angeordnet, dass zumindest ein hinteres Ende eines der beiden Stößel in eine Nut der Nockenwelle eingreifen kann oder eingreift, wenn, beispielsweise dadurch, dass eine Kraft auf den Stößelkopf in Längsrichtung des einen Stößels wirkt, die um den einen Stößel angeordnete Rückholfeder zusammengedrückt und der eine Stößel relativ zu der Führungshülse, in der er geführt wird, in Richtung auf die Nockenwelle bewegt wird.

Bevorzugt ist die Nockenwelle eine Schiebenockenwelle und die eine Nut ist zumindest abschnittsweise schräg zur Drehachse der Nockenwelle auf der Oberfläche der Nockenwelle um die Nockenwelle herumverlaufend ausgebildet. Schräg soll in diesem Zusammenhang bedeuten, dass die tangentiale Verlaufsrichtung der Nut zumindest abschnittsweise nicht senkrecht zur Drehachse der Nockenwelle gerichtet ist. Eine Schiebenockenwelle, bei der die Nockenwelle entlang ihrer Drehachse in einem bestimmten Bereich hin und her verschiebbar ist, hat den Vorteil, dass durch eine entsprechende Ausbildung und Ausgestaltung der Nutenform auf der Nockenwelle die Ventilerhebungen zeitlich relativ zueinander genau und exakt reproduzierbar eingestellt werden können und so ein optimaler Verbrennungsmotorfunktionsbereich gewählt werden kann.

In einer besonders bevorzugten Ausführungsform weist die Nockenwelle eine gemeinsame Nut für beide Stößel auf, die auf der Nockenwelle so angeordnet ist, dass abwechselnd entweder der erste Stößel oder der zweite Stößel in diese eine Nut eingreifen kann. Dadurch muß für mehrere Stößel nur eine Nut auf der Nockenwelle ausgebildet werden, was die Herstellung der Nockenwelle vereinfachen kann. Natürlich ist es auch möglich, dass jeder der beiden Stößel in eine eigene Nut, beispielsweise jeweils eine schräg zur Drehachse der Nockenwelle auf der Oberfläche der Nockenwelle um die Nockenwelle herumverlaufenden ausgebildeten Nut eingreifen kann.

Bei einer bevorzugten Ausführungsform der Stellvorrichtung sind die Längsachsen der Führungshülsen und/oder der Stößel senkrecht zur und in Richtung auf die Drehachse der gemeinsamen Nockenwelle gerichtet. Die Längsachsen der Führungshülsen und/oder Stößel können natürlich auch parallel zueinander verlaufend angeordnet sein.

Die erfindungsgemäße Stellvorrichtung wird nachfolgend anhand eines konkreten Ausführungsbeispieles näher erläutert. Die in der nachfolgenden Beschreibung verwendeten Bezeichnungen wie "oben", "unten", "links", "rechts" und ähnliches beziehen sich auf das Ausführungsbeispiel und sollen in keiner Weise einschränkend sein, auch dann nicht, wenn sie sich auf eine bevorzugte Ausführungsform beziehen. Der Ausdruck "senkrecht" soll in dieser Schrift Winkelbereiche zwischen 88 Grad und 92 Grad umfassen. Der Ausdruck "parallel" soll in dieser Schrift Winkelabweichungen von bis zu 2 Grad von der Parallelen umfassen. Es zeigt:

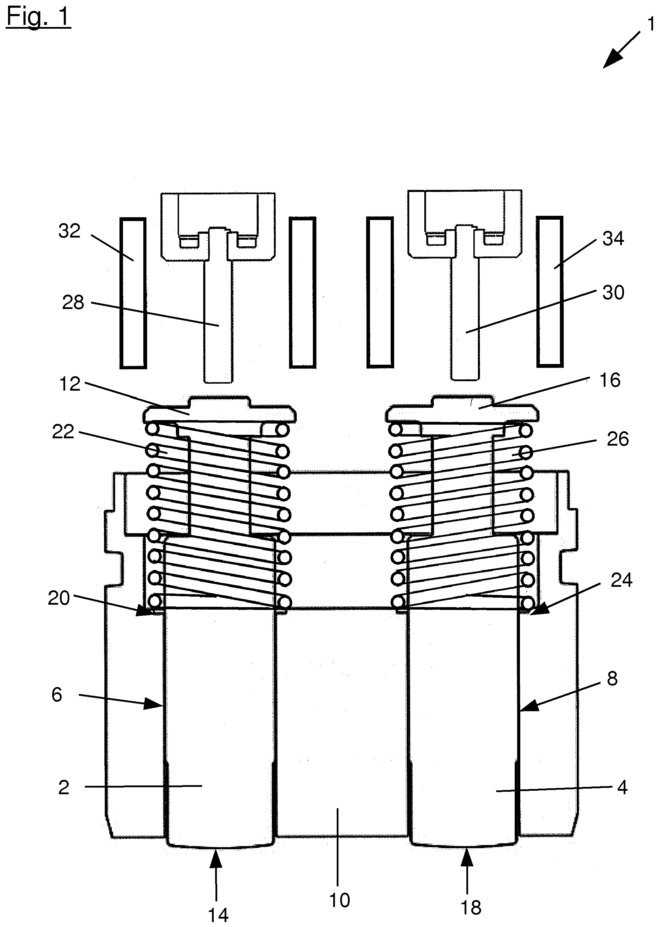

- Fig. 1: ein Beispiel der Stellvorrichtung mit zwei Stelleinheiten in einer Schnittdarstellung.

Eine im Linkssinn gewickelte Schraubenfeder soll im Folgenden in der Richtung, in der sie sich vom Betrachter entfernt gesehen, eine im entgegengesetzten Uhrzeigersinn sich windende Schraubenfeder sein. Eine im Rechtssinn gewickelte Schraubenfeder soll im Folgenden eine in der Richtung gesehen, in der sie sich vom Betrachter entfernt, im Uhrzeigersinn sich windende Schraubenfeder sein.

Figur 1 zeigt eine Stellvorrichtung 1 mit einem ersten Stößel 2 und einem zweiten Stößel 4. Der erste Stößel 2 ist in einer ersten Führungshülse 6 längsverschieblich angeordnet. Der zweite Stößel 4 ist in einer zweiten Führungshülse 8 längsverschieblich angeordnet. Die beiden Führungshülsen 6, 8 sind in einem Führungsgehäuse 10 fest beabstandet voneinander angeordnet. Der erste Stößel 2 weist einen ersten Stößelkopf 12 sowie ein dem ersten Stößelkopf 12 gegenüberliegendes hinteres Ende 14 auf. Ebenso weist der zweite Stößel 4 einen zweiten Stößelkopf 16 sowie ein dem zweiten Stößelkopf 16 gegenüberliegendes hinteres Ende 18 auf. Zwischen dem ersten Stößelkopf 2 und einer in dem Führungsgehäuse 10 ausgebildeten ersten Führungshülsenabstützung 20 stützt sich eine erste Rückholfeder 22 ab. Zwischen dem zweiten Stößelkopf 16 und einer in dem Führungsgehäuse 10 ausgebildeten zweiten Führungshülsenabstützung 24 stützt sich eine zweite Rückholfeder 26 ab. Die erste Rückholfeder 22 ist um den ersten Stößel 2 herum angeordnet. Die zweite Rückholfeder 26 ist um den zweiten Stößel 4 herum angeordnet. Ein erster Aktor 28 steht in Wirkverbindung mit dem ersten Stößelkopf 12. Ein zweiter Aktor 30 steht in Wirkverbindung mit dem zweiten Stößelkopf 16. Um den ersten Aktor 28 ist eine elektrisch betätigbare erste Aktorspule 32 angeordnet. Um den zweiten Aktor 30 ist eine zweite Aktorspule 34, die ebenfalls elektrisch betätigbar ist, angeordnet.

Wenn nun durch die erste Aktorspule 32 ein Strom fließt, wird der erste Aktor 28 nach unten auf den Stößelkopf 12 gedrückt und der Stößelkopf 12 wird in der ersten Führungshülse 6 geführt axial nach unten bewegt, bis das hintere Ende 14 des ersten Stößels 2 in eine Nut einer Nockenwelle (nicht dargestellt) eingreift. Die Nockenwelle (nicht dargestellt) dreht sich dabei um eine senkrecht zur Bewegungsrichtung des ersten Stößels 2 verlaufende Achse.

Wenn nun der Stößel 2 beispielsweise einen Rand der Nut der Nockenwelle, in der er geführt wird, berührt, wird auf Grund der zwischen dem Rand der Nut und dem hinteren Ende 14 des ersten Stößels wirkenden Reibungskraft dabei beispielsweise ein Drehmoment im entgegengesetzten Uhrzeigersinn, gesehen vom hinteren Ende 14 des Stößels 2 in Richtung auf den ersten Aktor 28, auf den ersten Stößel 2 übertragen. Der erste Stößel 2 steht, zumindest über Reibungskräfte, mit der ersten Rückholfeder 22 in Wirkverbindung und die erste Rückholfeder 22 steht, zumindest ebenfalls über Reibungskräfte, zumindest an ihrem unteren Ende, an welchem sie sich an der Führungshülse 6 abstützt, mit der ersten Führungshülse 6 in Wirkverbindung. Dreht sich nun der erste Stößel 2 in der ersten Führungshülse 6 im entgegengesetzten Uhrzeigersinn, gesehen von seinem hinteren Ende 14 aus, so dreht er sich in Richtung des Wicklungssinnes der ersten Rückholfeder 22, also im Linkssinn, so dass über die zwischen dem Stößel 2 und der Rückholfeder 22 wirkenden Reibungskräfte der Durchmesser der ersten Rückholfeder 22 sich differenziell verringert, so dass der erste Stößel 2 in und/oder an der ersten Führungshülse 6 nicht verkanten kann.

Da der Durchmesser der ersten Rückholfeder 22 sich differentiell verringert, kann das Ende der Rückholfeder 22 sich auch nicht zwischen dem ersten Stößel 2 und der letzten Windung der Rückholfeder 22 verklemmen. Auch wenn in diesem Fall das Ende der Rückholfeder durch den Stößel 2 allmählich abgeschliffen werden würde, und die Elastizität der Rückholfeder somit an dieser Stelle sich verringern würde, würde sich das Ende der Rückholfeder nicht zwischen dem ersten Stößel 2 und der letzten Windung der Rückholfeder 22 verklemmen, da die Bewegungsrichtung des Stößels 2 das Ende der Rückholfeder nicht entgegen dem Wicklungssinn der Rückholfeder 22 bewegen kann.

Wäre die erste Rückholfeder 22 keine im Drehsinn des ersten Stößels 2 gewickelte Schraubenfeder, sondern eine im entgegengesetzten Drehsinn des ersten Stößels 2 gewickelte Schraubenfeder, also eine im Rechtssinn gewickelte Schraubenfeder, so würde sich auf Grund der Reibungskraft zwischen der ersten Rückholfeder 22 und dem ersten Stößel 2 der Durchmesser der ersten Rückholfeder 22 differenziell vergrößern. Durch die relative Drehbewegung zwischen der Rückholfeder 22 und dem Stößel 2 würde das Ende der Rückholfeder 22 an ihrer Auflagefläche allmählich abgeschliffen und dadurch dünner. Dadurch verringert sich die Elastizität des Endes der Rückholfeder 22 und das Ende der Rückholfeder 22 kann durch die auf Grund des im zum Wicklungssinn der Schraubenfeder 22 entgegengesetzten Drehsinn des Stößels 2 vom Stößel 2 mitgenommen werden und sich zwischen dem Stößel 2 und der letzten Windung der Rückholfeder 22 verklemmen. Die erste Rückholfeder 22 könnte den ersten Stößel 2 dann nicht mehr in seine ursprüngliche Ausgangslage zurückbewegen, sobald der Aktor 28 nicht mehr auf den ersten Stößelkopf 12 drückt, was eine Fehlfunktion der Vorrichtung auslöst.

Die zweite Rückholfeder 26 ist eine im Rechtssinn gewickelte Schraubenfeder. Drückt nun der zweite Aktor 30 auf den zweiten Stößelkopf 16, so wird der zweite Stößel 4 in der zweiten Führungshülse 8 nach unten bewegt, bis er in eine Nut oder in eine weitere Nut der Nockenwelle eingreift. Die Drehung der Nockenwelle um eine Achse senkrecht zur Bewegungsrichtung des zweiten Stößels 4 bewirkt, dass der zweite Stößel 4 ein Drehmoment im Rechtssinn erfährt. Dadurch, dass die zweite Rückholfeder 26 ebenfalls eine Rückholfeder ist, welche eine gleichsinnig, also eine im Rechtssinn gewickelte Schraubenfeder ist, kann zuverlässig verhindert werden, dass der zweite Stößel 4 in der zweiten Führungshülse 8 verklemmt oder verkantet.

### Bezugszeichenliste

- 1: Stellvorrichtung
- 2: Erster Stößel
- 4: Zweiter Stößel
- 6: Erste Führungshülse
- 8: Zweite Führungshülse

- 10: Führungsgehäuse
- 12: Erster Stößelkopf; vorderes Ende des ersten Stößels
- 14: Hinteres Ende des ersten Stößels
- 16: Zweiter Stößelkopf; vorderes Ende des zweiten Stößels
- 18: Hinteres Ende des zweiten Stößels

- 20: Erste Führungshülsenabstützung
- 22: Erste Rückholfeder
- 24: Zweite Führungshülsenabstützung
- 26: Zweite Rückholfeder
- 28: Erster Aktor

- 30: Zweiter Aktor
- 32: Erste Aktorspule
- 34: Zweite Aktorspule

## Patentansprüche

1. Stellvorrichtung (1), aufweisend
einen ersten Stößel (2) und einen zweiten Stößel (4), wobei der erste Stößel (2) in einer ersten Führungshülse (6) und der zweiten Stößel (4) in einer zweiten Führungshülse (8) verschiebbar angeordnet ist, wobei der erste Stößel (2) zumindest abschnittsweise entlang seiner Längsachse von einer ersten Rückholfeder (22) umgeben ist und der zweite Stößel (4) zumindest abschnittsweise entlang seiner Längsachse von einer zweiten Rückholfeder (26) umgeben ist, und wobei die beiden Führungshülsen (6, 8) in festem Abstand zueinander angeordnet sind,
**dadurch gekennzeichnet, dass**
die erste Rückholfeder (22) eine im Linkssinn gewickelte Schraubenfeder ist, und die zweite Rückholfeder (26) eine im Rechtssinn gewickelte Schraubenfeder ist.

2. Stellvorrichtung (1) nach Anspruch 1,
**dadurch gekennzeichnet, dass**
die Schraubenfedern (22, 26) als glasfaserverstärkte Kunststofffedern ausgebildet sind.

3. Stellvorrichtung (1) nach einem der vorigen Ansprüche,
dadur chgekennzeichnet, dass
die Schraubenfedern (22, 26) an jedem ihrer Enden jeweils wenigstens zwei aneinander anliegende Endwindungen aufweisen.

4. Stellvorrichtung (1) nach Anspruch 3,
**dadurch gekennzeichnet, dass**
die im Linkssinn gewickelte Schraubenfeder (22), oder die im Rechtssinn gewickelte Schraubenfeder (26) an zumindest einem ihrer beiden Enden drei aneinander anliegende Endwindungen aufweist.

5. Stellvorrichtung (1) nach einem der Ansprüche 3 oder 4,
**dadurch gekennzeichnet, dass**
zumindest jeweils ein Ende jeder Schraubenfeder (22, 26) verstärkt ausgebildet ist.

6. Stellvorrichtung (1) nach einem der vorigen Ansprüche, aufweisend einen ersten Aktor (28) und einen zweiten Aktor (30),
**dadurch gekennzeichnet, dass**
der erste Aktor (28) relativ zu dem ersten Stößel (2) so angeordnet ist, dass er in Wirkverbindung mit dem vorderen Ende des ersten Stößels (2) steht, und der zweite Aktor (30) relativ zu dem zweiten Stößel (4) so angeordnet ist, dass er in Wirkverbindung mit dem vorderen Ende des zweiten Stößels (4) steht.

7. Stellvorrichtung nach Anspruch 6,
**dadurch gekennzeichnet, dass**
die Aktoren (28, 30) stabförmig ausgebildet sind und entlang ihrer jeweiligen Längsachsenrichtungen beweglich geführt sind.

8. Stellvorrichtung (1) nach Anspruch 6 oder 7,
**dadurch gekennzeichnet, dass**
die Aktoren (28, 30) magnetisch betätigbar und vorzugsweise von Aktorspulen umgeben sind.

9. Stellvorrichtung (1) nach einem der vorigen Ansprüche,
**dadurch gekennzeichnet, dass**
die Stößel (2, 4) stabförmig, vorzugsweise zylinderförmig, ausgebildet sind und jeweils eine Längsachse, ein vorderes Ende mit jeweils einem verdickt ausgebildeten Stößelkopf (12, 16) und ein hinteres Ende aufweisen.

10. Stellvorrichtung (1) nach einem der vorigen Ansprüche,
**dadurch gekennzeichnet, dass**
die Rückholfedern (22, 26) als Druckfedern ausgebildet sind, wobei sich jede Rückholfeder (22, 26) in und/oder an der Führungshülse (6, 8), in und/oder an der sie angeordnet ist, und an dem Stößelkopf (12, 16) des Stößels (2, 4), den sie umgibt, abstützt.

11. Stellvorrichtung (1) nach einem der vorigen Ansprüche, aufweisend eine Nockenwelle mit Nuten, die um die Drehachse der Nockenwelle verlaufend angeordnet sind,
**dadurch gekennzeichnet, dass**
die hinteren Enden der Stößel (2, 4) so ausgebildet und relativ zu der Nockenwelle so angeordnet sind, dass zumindest ein hinteres Ende eines der beiden Stößel (2, 4) in eine Nut der Nockenwelle eingreift, wenn die um den einen Stößel (2, 4) angeordnete Rückholfeder (22, 26) zusammengedrückt und der eine Stößel (2, 4) relativ zu der Führungshülse (6, 8), in der er geführt wird, in Richtung auf die Nockenwelle bewegt wird.

12. Stellvorrichtung (1) nach Anspruch 11,
**dadurch gekennzeichnet, dass**
die Nockenwelle eine Schiebenockenwelle ist und die eine Nut zumindest abschnittsweise schräg zur Drehachse der Nockenwelle auf der Oberfläche der Nockenwelle um die Nockenwelle herum verlaufend angeordnet ist.

13. Stellvorrichtung (1) nach Anspruch 11 oder 12,
**dadurch gekennzeichnet, dass**
die Längsachsen der Führungshülsen (6, 8) und/oder Stößel (2, 4) senkrecht zur und in Richtung auf die Drehachse der Nockenwelle gerichtet sind.

14. Stellvorrichtung (1) nach einem der vorigen Ansprüche,
**dadurch gekennzeichnet, dass**
die Längsachsen der Führungshülsen (6, 8) und/oder Stößel (2, 4) parallel zueinander verlaufend angeordnet sind.

15. Kraftfahrzeug, aufweisend eine Stellvorrichtung (1) nach einem der vorigen Ansprüche.

## Claims

1. Actuator device, comprising a first tappet (2) and a second tappet (4), wherein the first tappet (2) is arranged displaceably in a first guide sleeve (6) and the second tappet (4) is arranged displaceably in a second guide sleeve (8), wherein the first tappet (2) is surrounded at least partially along its longitudinal axis by a first restoring spring (22) and the second tappet (4) is surrounded at least partially along its longitudinal axis by a second restoring spring (26), and wherein the two guide sleeves (6, 8) are arranged at a fixed distance from one another, **characterised in that** the first restoring spring (22) is a helical spring wound in the left-hand direction and the second restoring spring (26) is a helical spring wound in the right-hand direction.

2. Actuator device (1) according to claim 1, **characterised in that** the helical springs (22, 26) are configured as fibreglass-reinforced plastic springs.

3. Actuator device (1) according to one of the preceding claims, **characterised in that** the helical springs (22, 26) have respectively, at each of their ends, at least two end windings which abut one another.

4. Actuator device (1) according to claim 3, **characterised in that** the helical spring (22) wound in the left-hand direction or the helical spring (26) wound in the right-hand direction has, at least at one of its two ends, three end windings which abut one another.

5. Actuator device (1) according to one of claims 3 or 4, **characterised in that** at least one respective end of each helical spring (22, 26) is reinforced.

6. Actuator device (1) according to one of the preceding claims, comprising a first actuator (28) and a second actuator (30), **characterised in that** the first actuator (28) is arranged relative to the first tappet (2) so that it is operatively connected to the front end of the first tappet (2) and the second actuator (30) is arranged relative to the second tappet (4) so that it is operatively connected to the front end of the second tappet (4).

7. Actuator device according to claim 6, **characterised in that** the actuators (28, 30) are configured in the form of rods and are movably guided along their respective longitudinal axial directions.

8. Actuator device (1) according to claim 6 or 7,
**characterised in that**
the actuators (28, 30) can be operated magnetically and are preferably surrounded by actuator coils.

9. Actuator device (1) according to one of the preceding claims, **characterised in that** the tappets (2, 4) have a rod-shaped, preferably cylindrical configuration and in each case have a longitudinal axis, a front end with respectively a thickened tappet head (12, 16), and a rear end.

10. Actuator device (1) according to one of the preceding claims, **characterised in that** the restoring springs (22, 26) are configured as compression springs, wherein each restoring spring (22, 26) is supported in and/or on the guide sleeve (6, 8), in and/or on which it is arranged, and on the tappet head (12, 16) of the tappet (2, 4) which it surrounds.

11. Actuator device (1) according to one of the preceding claims, comprising a camshaft with grooves which are arranged extending around the axis of rotation of the camshaft,
**characterised in that** the rear ends of the tappets (2, 4) are configured and arranged relative to the camshaft so that at least a rear end of one of the two tappets (2, 4) engages in a groove of the camshaft when the restoring spring (22, 26) arranged around one tappet (2, 4) is compressed, and the one tappet (2, 4) is moved, relative to the guide sleeve (6, 8) in which it is guided, in the direction towards the camshaft.

12. Actuator device (1) according to claim 11, **characterised in that** the camshaft is a sliding-cam camshaft and one groove is arranged so that it extends around the camshaft on the surface of the camshaft at least partially obliquely with respect to the axis of rotation of the camshaft.

13. Actuator device (1) according to claim 11 or 12, **characterised in that** the longitudinal axes of the guide sleeves (6, 8) and/or tappets (2, 4) are oriented perpendicular to and in the direction towards the axis of rotation of the camshaft.

14. Actuator device (1) according to one of the preceding claims, **characterised in that** the longitudinal axes of the guide sleeves (6, 8) and/or tappets (2, 4) are arranged so that they extend parallel to one another.

15. Motor vehicle comprising an actuator device (1) according to one of the preceding claims.

## Revendications

1. Dispositif de réglage (1) comprenant :
un premier poussoir (2) et un second poussoir (4), le premier poussoir (2) étant monté coulissant dans une première douille de guidage (6) et le second poussoir (4) étant monté coulissant dans une seconde douille de guidage (8), le premier poussoir (2) étant entouré, au moins par segments le long de son axe longitudinal par une premier ressort de rappel (22) et le second poussoir (4) étant entouré au moins par segments le long de son axe longitudinal par un second ressort de rappel (26), et les deux douilles de guidage (6, 8) étant situées à distance fixe l'une de l'autre, **caractérisé en ce que**
le premier ressort de rappel (22) est un ressort hélicoïdal à spires enroulées à gauche tandis que le second ressort de rappel (26) est un ressort hélicoïdal à spires enroulées à droite.

2. Dispositif de réglage conforme à la revendication 1, **caractérisé en ce que**
les ressorts hélicoïdaux (22, 26) sont réalisés sous la forme de ressorts en matériau synthétique renforcé par des fibres.

3. Dispositif de réglage conforme à l'une des revendications précédentes,
**caractérisé en ce que**
les ressorts hélicoïdaux (22, 26) comportent chacun à chacune de leur extrémité au moins deux spires d'extrémité appliquées l'une sur l'autre.

4. Dispositif de réglage (1) conforme à la revendication 3,
**caractérisé en ce que**
le ressort hélicoïdal (22) à spires enroulées à gauche ou le ressort hélicoïdal (26) à spires enroulées à droite comporte à au moins l'une de ses extrémités trois spires appliquées les unes sur les autres.

5. Dispositif de réglage conforme à l'une des revendications 3 à 4,
**caractérisé en ce qu'**
au moins une extrémité respective de chaque ressort hélicoïdal (22, 26) est renforcée.

6. Dispositif de réglage (1) conforme à l'une des revendications précédentes, comprenant un premier actionneur (28) et un second actionneur (30),
**caractérisé en ce que**
le premier actionneur (28) est monté par rapport au premier poussoir (2) de sorte qu'il soit en liaison active avec l'extrémité avant de ce premier poussoir (2), et le second actionneur (30) est monté par rapport au second poussoir (4) de sorte qu'il soit en liaison active avec l'extrémité avant de ce second poussoir (4).

7. Dispositif de réglage conforme à la revendication 6,
**caractérisé en ce que**
les actionneurs (28, 30) sont en forme de barres et sont mobiles le long de la direction de leurs axes longitudinaux respectifs.

8. Dispositif de réglage (1) conforme à la revendication 6 ou 7,
**caractérisé en ce que**
les actionneurs (28, 30) sont à commande magnétique et sont de préférences entourés par des bobines d'actionneur.

9. Dispositif de réglage (1) conforme à l'une des revendications précédentes,
**caractérisé en ce que**
les poussoirs (2, 4) sont en forme de barres, de préférence de forme cylindrique, et comportent respectivement un axe longitudinal, une extrémité avant ayant une tête de poussoir (12, 16) épaissie et une extrémité arrière.

10. Dispositif de réglage (1) conforme à l'une des revendications précédentes,
**caractérisé en ce que**
les ressorts de rappel (22, 26) sont réalisés sous la forme de ressorts de pression, et chaque ressort de rappel (22, 26) s'appuie dans/ou sur la douille de guidage (6, 8), dans et/ou sur laquelle il est monté et sur la tête (12, 16) du poussoir (2, 4) qui l'entoure.

11. Dispositif de réglage (1) conforme à l'une des revendications précédentes, comportant un arbre à cames ayant des rainures qui s'étendent autour de son axe de rotation,
**caractérisé en ce que**
les extrémités arrière des poussoirs (2, 4) sont réalisées et positionnées par rapport à l'arbre à cames de sorte qu'au moins l'extrémité arrière de l'un des deux poussoirs (2, 4) vienne en prise dans une rainure de l'arbre à cames lorsque le ressort de rappel (22, 26) monté autour de ce poussoir (2, 4) est comprimé, et l'un des poussoirs (2, 4) est déplacé dans la direction de l'arbre à cames par rapport à la douille de guidage (6, 8) dans laquelle il est guidé.

12. Dispositif de réglage (1) conforme à la revendication 11,
**caractérisé en ce que**
l'arbre à cames est un arbre à cames coulissant et la rainure s'étend au moins par segments obliquement par rapport à l'axe de rotation de l'arbre à cames, sur la surface de cet arbre à cames, autour de celui-ci.

13. Dispositif de réglage (2) conforme à la revendication 11 ou 12,
**caractérisé en ce que**
les axes longitudinaux des douilles de guidage (6, 8) et/ou des poussoirs (2, 4) sont orientés perpendiculairement à et en direction de l'axe de rotation de l'arbre à cames.

14. Dispositif de réglage (1) conforme à l'une des revendications précédentes,
**caractérisé en ce que**
les axes longitudinaux des douilles de guidage (6, 8) et/ou des poussoirs (2, 4) s'étendent parallèlement.

15. Véhicule comprenant un dispositif de réglage (1) conforme à l'une des revendications précédentes.
